# EUROPEAN PATENT SPECIFICATION

(11) **EP 0 790 286 B1**
(45) Date of publication and mention of the grant of the patent: **16.07.2003**
(21) Application number: 96203637.2
(22) Date of filing: 19.12.1996
(51) Int. Cl.: C09G 1/04, C11D 3/43, C11D 1/75, A47L 11/162, A47L 11/34

(54) **Surface treating process and device**
Verfahren und Vorrichtung zur Oberflächenbehandlung
Procédé et appareil pour le traitement de surfaces

(30) Priority: 13.02.1996 EP 96200333
(43) Date of publication of application: 20.08.1997
(73) Proprietor: JohnsonDiversey, Inc., Sturtevant, Wisconsin 53177-0902 (US)
(72) Inventor: van der Heyden, Lambertus Gerardus P., 3606 AN Maarssen (NL); te Linde, Johny L., 3606 AN Maarssen (NL); Wientjes, Oscar C., 3606 AN Maarssen (NL)
(74) Representative: Ruschke, Hans Edvard, Dipl.-Ing.

(56) References cited:
- EP-A- 0 215 451
- WO-A-94/22996
- GB-A- 1 063 758
- US-A- 3 028 615
- US-A- 4 690 779

## Description

The present invention relates to a process for treating and repairing hard surfaces, preferably floor surfaces, particularly floor surfaces consisting of a polymer film. The invention also relates to a device specially adapted for use in the process of the invention.

Floor cleaning processes are well-known in the art.
Some floor surfaces additionally need protection in order to facilitate the cleaning thereof, to avoid or diminish wear, and for aesthetical reasons. Such protection can be obtained by applying to said floor surfaces soap-based products, wax-based products or polymer-based products. Polymer-based products which generally offer the best protection, are usually polymer dispersions comprising polymer, wax, alkaline soluble resin, plasticizer and water.

Polymer dispersions are applied onto a floor surface in the form of a thin polymer film, for instance a thin acrylate polymer film. This type of film is usually hard, transparent, and resistant to wear. However, even durable polymer films are susceptable to attrition. Therefore, several products are commercially available for the maintenance of polymer films. Since the main constituent of these maintenance products is wax, the floor surface obtains the properties of the wax after treatment with such a maintenance product. In other words, the floor surface becomes less hard, less transparent and more resistant to wear, after this type of maintenance.

For the treatment of a floor surface with a waxy maintenance product of the prior art, a floor polishing machine is usually applied containing one round pad or brush and a spray-bottle. Using this machine, wax is sprayed onto the floor surface and, subsequently, said wax is polished with the brush or pad. This process is rather inefficient since a considerable amount of maintenance product disappears into the polishing brush or pad. Furthermore, wear of the polymer film is not significantly reduced by applying this method, and replacement of the polymer film will be needed after a certain period of use.

It is an object of the present invention to provide a process for treating floor surfaces consisting of a polymer film, which process does not suffer from the above-discussed problems.

At present, replacement of polymer films on floor surfaces is considered to be more and more problematic for environmental and safety reasons. Reason is that highly alkaline products and/or environmentally less desirable solvents, such as glycol ethers, are needed for said replacement.

It is, therefore, another object of the invention to find a method by which, preferably in a simple way, the quality of the polymer film can be improved so as to avoid replacement thereof.

It was surprisingly found that these and other objects can be achieved when applying the process according to the present invention. It was also found that said process can be effectively carried out using the device according to the present invention.

### Definition of the invention

Accordingly, in one aspect the invention provides a process for treating and repairing a hard surface consisting of a polymer film, such as a floor surface, according to claim 1.

The properties of the liquid repair product used in this process -after drying thereof- which are similar to those of the polymer film are wear resistance, gloss, transparency, hardness, removability, water-resistance, slip-resistance.

Desirably, a manually operated floor treating device is used in the process of the invention, said device comprising a grip (1), a shaft (2), two start/stop buttons (3,4), two tanks (5,6) filled with cleaning product respectively liquid repair product and situated on opposite sides of the shaft, both of which tanks being connected to a spraying nozzle (7,8) operable by way of an electric pump, and a turnable member (9) connected to the bottom side of the shaft by way of a hinge (10).

### Detailed description of the invention

The process of the invention is very suitable for repairing, in a simple way, local wear of a floor surface consisting of a polymer film while maintaining the excellent properties of the film.

The process of the invention includes a cleaning step, a repair step and a drying step. The properties of the repair product applied during the repair step, are similar to those of the polymer film to be treated and repaired: after application onto said film, the repair product exhibits similar hardness, wear resistance, slip-resistance, water resistance, gloss, removability and transparency as the original polymer film. However, for these properties to be obtainable, a good attachment of the repair product to the original polymer film is essential. Therefore, a cleaning step is required.

It is known that various of the known floor cleaning products interfere with the floor repair products according to the invention, resulting in less than optimal adhesion, gloss and transparancy of the repair product. In those cases, flushing of the floor surface with clean water before treatment with the repair product is desirable for obtaining favourable results.

It has now been found that an aqueous cleaning product comprising 1-5% by weight of an aminoxide, as a surfactant, a solvent mixture including 1-20% by weight of gamma butyrolactone and 1-20% by weight of a methylic diester of glutaric, succinic and adipic acids, and 1-10% by weight of a builder selected from citrates, phosphates and mixtures thereof, all percentages being based on the cleaning product, is fully compatible with the repair product. Such cleaning products are used in the process of the invention since the mentioned flushing step is not needed when applying these products which simplifies the floor treatment process significantly.

The most suitable type of aminoxide for use in this type of cleaning product is cocodimethylaminoxide.

Suitable liquid repair product used in the process of the invention are those comprising 1-40% by weight of a polymer dispersion, 0.5-40% by weight of a wax dispersion, 0.5-30% by weight of a solvent and up to 100% by weight of water.

More preferably, said liquid repair product comprises additionally 0.1-10% by weight of a plasticizer, up to 20% by weight of an alkaline soluble resin, such as rosin-based resin, and up to 5% by weight of an anionic surfactant.

The wax dispersion is effectively a polyethylenewax dipersion, and the polymer dispersion is desirably a mixture of an acrylic dispersion and a polyurethane dispersion. For improving the adhesion, cleaning and (fast-)drying properties of the liquid repair product, said product contains preferably also up to 30% by weight of an alcohol, particularly isopropanol.

It is desirable that the process of the invention is carried out in a simple way so as to enable quick treatment of the floor surface to be repaired. In order to enable such quick and simple treatment of floor surfaces, the manually operated floor treating device of the invention has been developed.

When applying this device in the process of the invention, it only needs to be lifted and turned over an angle of 180° for treatment with liquid repair product of the cleaned floor surface. Furthermore, the floor treating device of the invention contains everything needed for quick and effective repair of the floor surface. No additional materials are needed.

These characteristics allow quick and simple treatment of the floor surface.

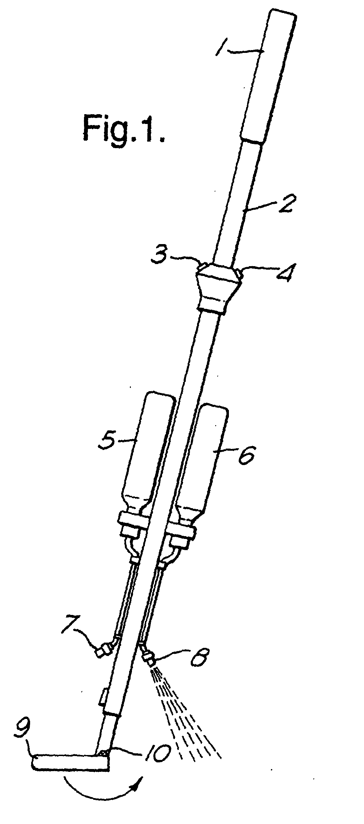

The invention is further illustrated by Figure 1 which shows a schematic cross-sectional view of the floor treating device according to the invention.

The floor treating device shown in Figure 1, is manually operable by way of grip (1) which is situated at the top side of shaft (2). The two start/stop buttons (3,4) are present at the shaft not far from the grip. When button (3) is activated, liquid cleaning product is pumped out of tank (5) and sprayed by way of nozzle (7) onto the floor surface to be treated. On the other hand, when button (4) is activated, liquid repair product present in tank (6) is pumped out of said tank to spray nozzle (8) and sprayed by said spray nozzle onto the floor surface. The pumping action is achieved using electric pumps (not shown).

When using the device shown in Figure 1, the liquid cleaning product is first sprayed on to the floor surface by way of nozzle (8). The cleaning product is subsequently distributed with a turnable member (9) which is connected to the bottom side of the shaft (2) by way of a hinge (10). In the next step, the floor cleaning machine is lifted and turned over an angle of about 180° such that the two tanks (5,6) change position. Thereafter, the liquid repair product is sprayed onto the floor surface by way of spray nozzle (7), and distributed using turnable member (9). As a last step of this treating process, the treated and repaired floor surface is allowed to dry for at least 10 minutes.

## Claims

1. Process for treating and repairing a hard surface consisting of a polymer film, such as a floor surface, said process comprising the steps of:
(i) cleaning said surface with an aqueous cleaning product comprising
(a) 1-5% by weight of an aminoxide;
(b) a solvent mixture including 1-20% by weight of gamma butyrolactone and 1-20% by weight of a methylic diester of glutaric, succinic and adipic acids;
(c) 1-10% by weight of a builder selected from citrates, phosphates and mixtures,
all percentages being based on the cleaning product,
(ii) applying to the cleaned surface a liquid repair product, the properties of said liquid repair product, after drying thereof, being similar to those of the polymer film, said properties being wear resistance, gloss, transparancy, hardness, removability, water-resistance, and slip-resistance; and
(iii) allowing the thus-treated surface to dry for at least 5 minutes.

2. Process according to claim 1, wherein the aminoxide is cocodimethylaminoxide.

3. Process according to claim 1 or claim 2, wherein the liquid repair product comprises 1-40% by weight of a polymer dispersion, 0.5-40% by weight of a wax dispersion, 0.5-30% by weight of a solvent and up to 100% by weight of water.

4. Process according to claim 3, wherein the liquid repair product additionally comprises 0.1-10% by weight of a plasticizer, up to 20% by weight of an alkaline soluble resin, and up to 5% by weight of an anionic surfactant.

5. Process according to any of claims 1-4, wherein a manually operated floor cleaning device is used, said device comprising a grip (1), a shaft (2), two start/stop buttons (3,4), two tanks (5,6) filled with cleaning product respectively liquid repair product and situated on opposite sides of the shaft, both of which tanks being connected to a spraying nozzle (7,8) operable by way of an electric pump, and a turnable member (9) connected to the bottom side of the shaft by way of a hinge (10), said process comprising the steps of:
(i) cleaning the floor surface by spraying the cleaning product onto the floor by way of nozzle (8);
(ii) distributing said cleaning product using member (9);
(ii) turning the floor cleaning device over an angle of about 180° such that the two tanks (5,6) change position;
(iv) spraying and distributing the liquid repair product using the method mentioned above for the cleaning product;and (v) allowing the thus treated floor to dry for at least 5 minutes.

## Patentansprüche

1. Verfahren zur Behandlung und Pflege einer harten Oberfläche aus einem Polymerfilm, wie beispielsweise einer Fußbodenoberfläche, wobei das Verfahren folgende Schritte umfasst:
(i) die Reinigung der Oberfläche mit einem wässrigen Reinigungsprodukt, welches
(a) 1-5 Gew.-% eines Aminoxids;
(b) ein Lösungsmittelgemisch aus 1-20 Gew.-% γ-Butyrolacton und 1-20 Gew.-% der Dimethylester von Glutarsäure, Bernsteinsäure und Adipinsäure;
(c) 1-10 Gew.-% eines Gerüststoffs, ausgewählt aus Citraten, Phosphaten und deren Gemischen, umfasst, wobei alle Prozentangaben auf das Reinigungsprodukt bezogen sind,
(ii) Auftragen eines flüssigen Pflegeprodukts auf die gereinigte Oberfläche,
wobei die Eigenschaften des flüssigen Pflegeprodukts nach dem Trocknen denen des Polymerfilms gleichen, insbesondere Strapazierfähigkeit, Glanz, Transparenz, Härte, Ablösbarkeit, Wasserbeständigkeit und Rutschfestigkeit, und
(iii) mindestens 5-minütiges Trocknenlassen der so behandelten Oberfläche.

2. Verfahren nach Anspruch 1, worin das Aminoxid Cocodimethylaminoxid ist.

3. Verfahren nach Anspruch 1 oder Anspruch 2, worin das flüssige Pflegeprodukt 1-40 Gew.-% einer Polymerdispersion, 0,5-40 Gew.-% einer Wachsdispersion, 0,5-30 Gew.-% eines Lösungsmittels und bis zu 100 Gew.-% Wasser umfasst.

4. Verfahren nach Anspruch 3, worin das flüssige Pflegeprodukt zusätzlich 0,1-10 Gew.-% eines Weichmachers, bis zu 20 Gew.-% eines alkalilöslichen Harzes und bis zu 5 Gew.-% eines anionischen oberflächenaktiven Mittels umfasst.

5. Verfahren nach einem der Ansprüche 1 bis 4, worin eine manuell betriebene Vorrichtung zur Fußbodenreinigung verwendet wird, welche einen Griff (1), einen Schaft (2), zwei Start/Stopp-Knöpfe (3,4), zwei Vorratsbehälter (5,6), die mit Reinigungsprodukt bzw. flüssigem Pflegeprodukt gefüllt sind und sich an gegenüberliegenden Seiten des Schafts befinden, wobei beide Vorratsbehälter mit einer Sprühdüse (7,8) verbunden sind, die mit einer elektrischen Pumpe betrieben wird, sowie ein drehbares Element (9), das über ein Gelenk (10) mit der Unterseite des Schafts verbunden ist,
wobei das Verfahren die folgenden Schritte umfasst:
(i) Reinigen der Fußbodenoberfläche durch Aufsprühen des Reinigungsprodukts durch die Düse (8) auf den Fußboden;
(ii) Verteilen des Reinigungsprodukts mit dem Element (9);
(iii) Drehen der Vorrichtung zur Fußbodenreinigung um einen Winkel von etwa 180°, so dass die beiden Vorratsbehälter (5, 6) ihre Position ändern;
(iv) Aufsprühen und Verteilen des flüssigen Pflegeprodukts nach dem oben für das Reinigungsprodukt genannten Verfahren; und
(v) mindestens 5-minütiges Trocknenlassen des so behandelten Fußbodens.

## Revendications

1. Procédé de traitement et de réparation d'une surface dure constituée d'un film polymère, telle qu'une surface de sol, ledit procédé comprenant les étapes consistant à :
(i) nettoyer ladite surface à l'aide d'un produit nettoyant aqueux comprenant
(a) de 1 à 5 % en poids d'un aminoxyde ;
(b) un mélange de solvants comprenant de 1 à 20 % en poids de gamma butyrolactone et de 1 à 20 % en poids d'un diester méthylique d'acides glutarique, succinique et adipique ;
(c) de 1 à 10 % en poids d'un adjuvant choisi parmi les citrates, les phosphates et des mélanges de ceux-ci,
tous les pourcentages étant basés sur le produit nettoyant,
(ii) appliquer un produit de réparation liquide sur la surface nettoyée, les propriétés dudit produit de réparation liquide, une fois sec, étant similaires à celles d'un film polymère, lesdites propriétés étant la résistance à l'usure, la brillance, la transparence, la dureté, la possibilité de l'enlever, la résistance à l'eau et la résistance au glissement ; et
(iii) laisser sécher la surface ainsi traitée pendant au moins 5 minutes.

2. Procédé selon la revendication 1, dans lequel l'aminoxyde est le cocodiméthylaminoxyde.

3. Procédé selon la revendication 1 ou la revendication 2, dans lequel le produit de réparation liquide comprend de 1 à 40 % en poids d'une dispersion de polymère, de 0,5 à 40 % en poids d'une dispersion de cire, de 0,5 à 30 % en poids d'un solvant et jusqu'à 100 % en poids d'eau.

4. Procédé selon la revendication 3, dans lequel le produit de réparation liquide comprend en outre de 0,1 à 10 % en poids d'un plastifiant, jusqu'à 20 % en poids d'une résine soluble alcaline, et jusqu'à 5 % en poids d'un tensioactif anionique.

5. Procédé selon l'une quelconque des revendications 1 à 4, dans lequel un dispositif de nettoyage des sols à fonctionnement manuel est utilisé, ledit dispositif comprenant une poignée (1), un arbre (2), deux boutons marche/arrêt (3, 4), deux réservoirs (5, 6) respectivement remplis de produit nettoyant et de produit de réparation liquide et situés sur les côtés opposés de l'arbre, ces deux réservoirs étant reliés à un gicleur (7, 8) fonctionnant au moyen d'une pompe électrique, et un élément pivotant (9) relié à la partie inférieure de l'arbre par une articulation (10),
ledit procédé comprenant les étapes consistant à :
(i) nettoyer la surface du sol en vaporisant le produit nettoyant sur le sol à l'aide du gicleur (8) ;
(ii) répartir ledit produit nettoyant à l'aide de l'élément (9) ;
(iii) faire pivoter le dispositif de nettoyage des sols selon un angle de 180° de telle sorte que les deux réservoirs (5, 6) changent de place ;
(iv) vaporiser et répartir le produit de réparation liquide en utilisant le procédé mentionné ci-dessus concernant le produit de nettoyage ; et
(v) laisser sécher le sol ainsi traité pendant au moins 5 minutes.
